**Europäisches Patentamt**

**European Patent Office**

**Office européen des brevets**

(19)

(11) Veröffentlichungsnummer: **0 322 606 B1**

(12) # EUROPÄISCHE PATENTSCHRIFT

(45) Veröffentlichungstag der Patentschrift:
**15.05.91 Patentblatt 91/20**

(51) Int. Cl.⁵ : **B60R 3/02**

(21) Anmeldenummer: **88120441.6**

(22) Anmeldetag: **07.12.88**

(54) Fahrzeug mit innerer Aufstiegshilfe.

(30) Priorität: **24.12.87 DE 8716990 U**

(43) Veröffentlichungstag der Anmeldung:
**05.07.89 Patentblatt 89/27**

(45) Bekanntmachung des Hinweises auf die
Patenterteilung:
**15.05.91 Patentblatt 91/20**

(84) Benannte Vertragsstaaten:
**DE ES FR GB IT NL SE**

(56) Entgegenhaltungen:
**US-A- 2 533 050**
**US-A- 3 826 337**
**US-A- 4 243 120**

(73) Patentinhaber: **Iveco Magirus
Aktiengesellschaft
Schillerstrasse 2 Postfach 27 40
W-7900 Ulm/Donau (DE)**

(72) Erfinder: **Egle, Elmar
Sebastian-Fischer-Weg 32
W-7900 Ulm (DE)**
Erfinder: **Kraus, Ulrich
Lichtensteinstrasse 3
W-7900 Ulm (DE)**

(74) Vertreter: **Socha, Peter
Iveco Magirus AG Postfach 2740
Schillerstrasse 2
W-7900 Ulm (DE)**

## Beschreibung

Die Erfindung betrifft ein Fahrzeug mit Aufstiegshilfe im Fahrzeuginnenraum.

Es ist bekannt, in Nutzfahrzeug-Fahrerhäusern mit hinterer Querliege eine Aufstiegshilfe in Form einer hochklappbaren Leiter für eine hochgelegene Liege vorzusehen. Desgleichen kennt man nach dem Stand der Technik Ablagen in Fahrerhäusern im Bereich des Mitteltunnels zwischen Fahrer- und Beifahrerseite, wobei einzelne Ablagefächer oder -boxen derartig verschwenkbar bzw. höhenverstellbar sind, daß diese in einer hochgelegenen Position als Aufstiegshilfe für eine hintere hochgelegene Querliege verwendet werden können (vgl. beispielsweise DE-PS 32 45 394 oder DE-OS 35 01 714). Die erstgenannte bekannte Konstruktion mit einer hochklappbaren Leiter ist aufwendig und verlangt einen großen Raumbedarf. Letzgenannte Variante schafft zwar eine Mehrfachfunktion einer Ablage ; die Konstruktion ist jedoch so getroffen, daß sie gleichwohl viel Einbauraum benötigt und insbesondere ein Durchstieg von Fahrer- zum Beifahrersitz kaum möglich oder zumindest erschwert ist.

Aufgabe der Erfindung ist die Schaffung eines Fahrzeugs mit innerer Aufstiegshilfe der eingangs genannten Art, die vorgenannte Nachteile großenteils beseitigt und insbesondere bei sehr einfachem Aufbau benutzungssicher im Betrieb ist und wenig Einbauraum benötigt.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 9.

Wesen der Erfindung ist zumindest ein im wesentlichen U-förmiger Auftrittsbügel mit einer im wesentlichen horizontalen Basis, die als Sprosse oder Trittfläche ausgebildet ist. Die Basis ist insbesondere geradlinig und vergleichsweise lang ausgebildet, so daß eine breite Trittfläche oder Sprosse geschaffen wird. Der U-förmige Auftrittsbügel weist zwei voneinander beabstandete parallele Schenkel auf, die in fahrzeugfesten Drehschiebegelenken aufgenommen, in sich anschließenden fahrzeugfesten Kulissenführungen geführt und endseitig am Kulissenboden abgestützt sind.

Zweckmäßigerweise sind schräge, geradlinige Kulissenführungen für jeden einzelnen Schenkel des U-förmigen Auftrittsbügels vorgesehen, wobei in vorteilhafter Weiterbildung der Erfindung für jeden Schenkel zusätzlich eine horizontale geradlinige Kulissenführung ausgebildet sein kann, die höher liegt als die schräge Kulissenführung. Horizontale und schräge Kulissenführung eines jeden Schenkels treffen sich bevorzugt in einer Schnittstelle, die gleichzeitig die Schwenkachse des zugehörigen Drehschiebegelenks ist. Selbstverständlich sind für jeden Schenkel gleich ausgebildete Kulissenführungen bei einer individuellen Ausführungsvariante vorgesehen.

Für eine Lageveränderung bzw. Höhenverstellbarkeit einer Sprosse oder Trittfläche des Auftrittsbügels sind vorzugsweise die Schenkel teleskopartig verlängerbar ausgebildet, so daß unterschiedliche Längen von Schenkeln eingestellt werden können, deren Enden sich an den Kulissenböden abstützen.

Die Kulissenführungen eines jeden Schenkels sind zweckmäßigerweise in einer fahrzeugfesten Zwischenplatte ausgebildet, wobei die Zwischenplatte in Sandwichanordnung in einer Vertikalebene im Fahrzeug angeordnet ist.

Sind schräge Kulissenführungen in der im wesentlichen rechtwinkligen oder quadratischen Zwischenplatte in vorteilhafter Weiterbildung der Erfindung spitzwinklig und deutlich von 45° unterscheidend vorgesehen, so kann eine einzige Zwischenplatte in seitenverkehrter Montage am Fahrzeug unterschiedlich schräge Kulissenführungen realisieren und mithin unterschiedliche Aufstiegsanordnungen schaffen bei Verwendung praktisch identischer Einzelteile.

Die fahrzeugfesten Befestigungselemente des Auftrittsbügels (Drehschiebergelenke, Kulissenführungen, Zwischenplatten) sind bevorzugt an bzw. in einem anderen fest eingebauten Funktionsteil wie beispielsweise einem Sitzunterbau, Querliegen-Unterbau, Schrankelement, Schubladenelement, Fahrzeugtunnel o.dgl., angeordnet. Befindet sich der Auftrittsbügel bei horizontaler Schenkelanordnung in seiner eingeschobenen Nichtgebrauchslage, so nimmt dieser praktisch keinen zusätzlichen Raum ein. Der Raum ist also bei Nichtgebrauch der Auftrittshilfe anderweitig nutzbar. Befindet sich, wie dies in vorteilhafter Weiterbildung der Erfindung vorgesehen ist, der Auftrittsbügel im Mitteltunnelbereich in einem Nutzfahrzeug-Fahrerhaus hinter den Sitzen, so ist mithin ein ungehinderter Durchstieg im Mitteltunnelbereich möglich, wenn der Auftrittsbügel eingeschoben ist.

In der eingeschobenen Lage kann der Auftrittsbügel auch als (stabiler) Sperr- oder Sicherheitsbügel zum Versperren von Schubladenelementen o.dgl. verwendet werden. Das Schubladenelement kann mithin praktisch als einbruchsichere und gegebenenfalls feuerfeste Box bzw. als Safe ausgestaltet sein.

In Nutzfahrzeug-Fahrerhäusern kann mithin mit Hilfe einfacher Mittel ein stabiler benutzungssicherer Aufstieg für eine hintere hochgelegene Querliege geschaffen werden, ohne den freien Durchstieg im Mitteltunnelbereich in der Nichtgebrauchslage der Aufstiegshilfe zu behindern. Der Aufstieg ist ergonomisch günstig in das Fahrerhaus integriert. Er läßt sich ohne großen Aufwand schnell und sicher in die Gebrauchslage und umgekehrt bringen.

Die Erfindung wird nachfolgend anhand von Ausführungsbeispielen unter Bezugnahme auf die beigefügte Zeichnung näher erläutert ; es zeigen :

Fig. 1 eine perspektivische Schnittzeichnung eines Auftrittsbügels mit Sicht auf Drehschiebegelenk und Kulissenführung,

Fig. 2 der Auftrittsbügel in seiner Gebrauchslage,

Fig. 3 der Auftrittsbügel nach den Fig. 1 und 2 in seiner Nichtgebrauchslage,

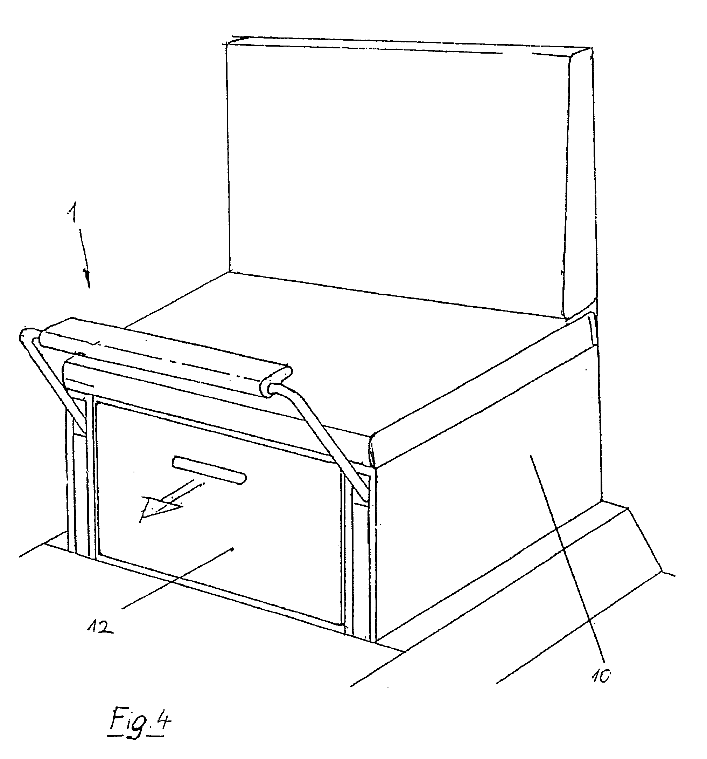

Fig. 4 ein Auftrittsbügel in seiner Gebrauchslage in Verbindung mit einem Notsitz und einem herausziehbaren Staufach, und

Fig. 5 und 6 unterschiedliche Ausführungsbeispiele von Auftrittsbügeln in ihrer Gebrauchslage in schematischer Seitenansicht bei gleicher Kulissenführung.

Gemäß Zeichnung ist bei einem Nutzfahrzeug hinter den Fahrersitzen im Mitteltunnelbereich des Fahrerhauses eine Aufstiegshilfe in Form eines U-förmigen Auftrittsbügels (1) vorgesehen, der eine verstaute Nichtgebrauchslage und eine exponierte Gebrauchslage einnehmen kann, wie nachfolgend noch beschrieben wird.

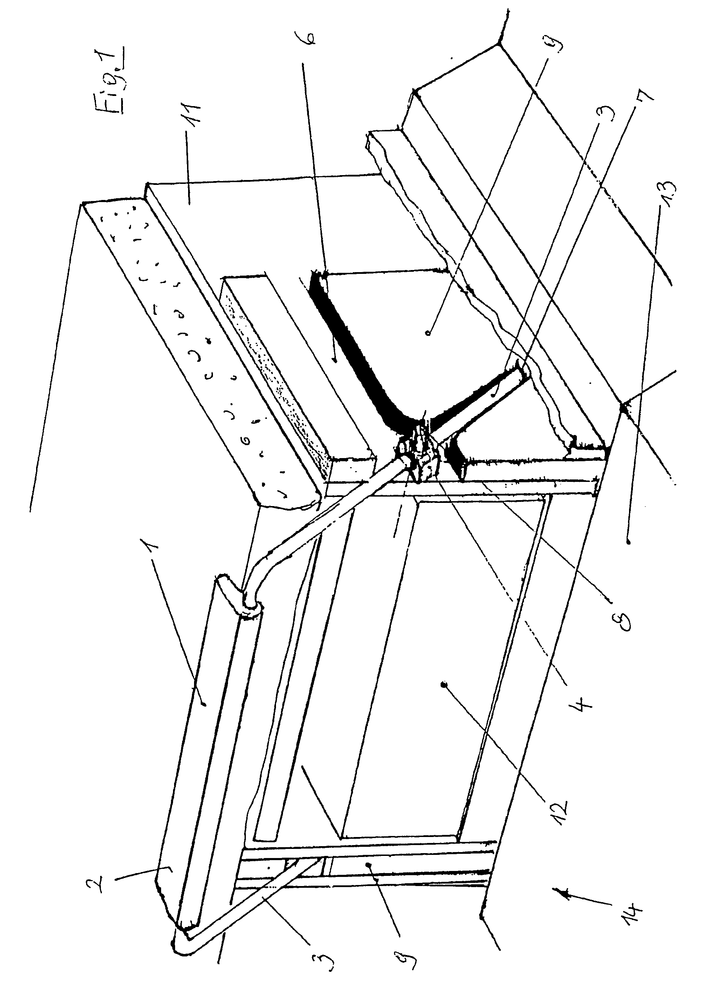

Der U-förmige Auftrittsbügel (1) umfaßt eine geradlinige vergleichsweise lange im wesentlichen horizontal verlaufende als Sprosse oder Trittfläche ausgebildete Basis sowie zwei sich rechtwinklig anschließende im wesentlichen parallel zueinander verlaufende Schenkel (3), die in zugehörigen fahrzeugfesten Drehschiebegelenken (4) aufgenommen und nach den Drehschiebegelenken in zugeordneten fahrzeugfesten Kulissenführungen (5) geführt und endseitig am Kulissenboden (7) abgestützt sind. Die vorgenannten Kulissenführungen (5) verlaufen geradlinig und schräg in einer fahrzeugfesten Zwischenplatte (9), die in einer Sandwichbauweise vertikal unter einer Querliege in einem Bettunterbau (11) oder unter einem Notsitz bzw. in einem Sitzunterbau (10) fahrzeugfest angeordnet ist. Die Schräge der Kulissenführungen (5) ist hierbei so getroffen, daß ein U-förmiger Auftrittsbügel (1) in seiner exponierten Gebrauchslage bei Abstützung in der schrägen Kulissenführung schräg nach vorne und nach oben stabil gehalten ist, wie dies insbesondere der Fig. 1 zu entnehmen ist.

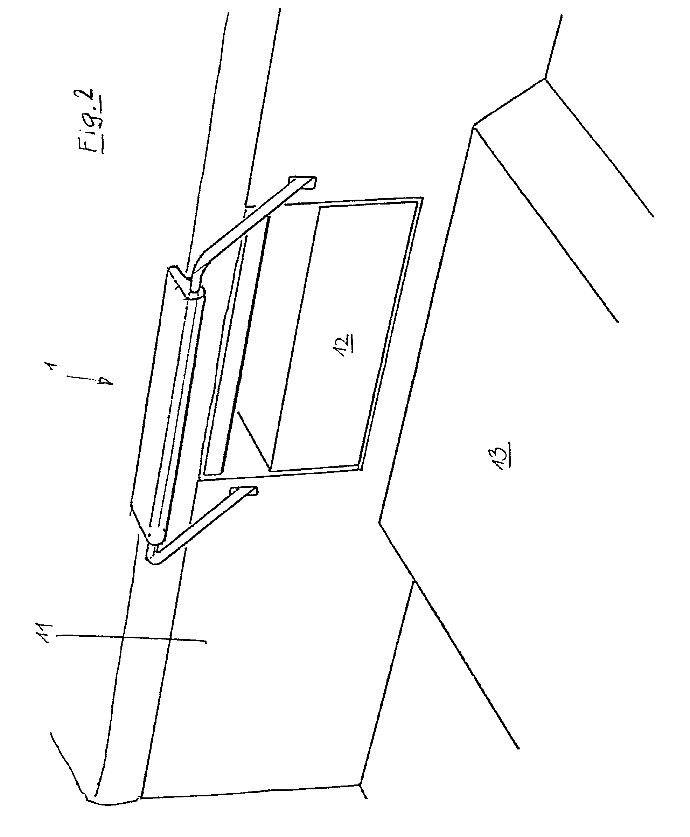

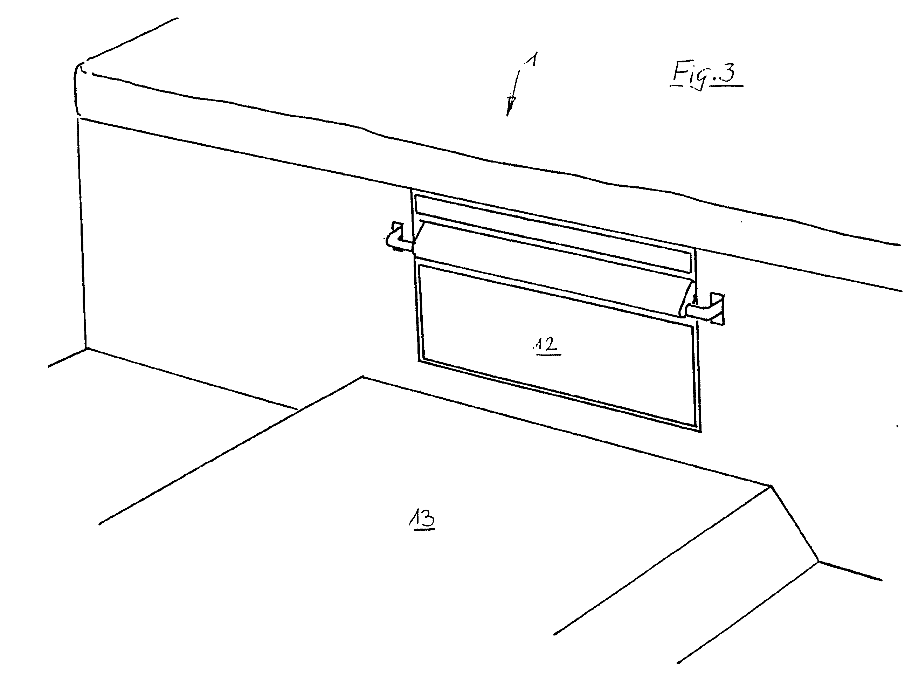

Die beiden Zwischenplatten (9) umfassen ferner horizontale Kulissenführungen (6), die an vorderer Schnittstelle mit der zugehörigen schrägen Kulissenführung (5) die Befestigungsstelle einer horizontalen Schwenkachse (8) definieren, die einem dortigen Drehschiebegelenk (4) zugeordnet ist. Mithin kann auf einfache sichere Weise der Aufstiegsbügel (1) der Fig. 1 und 2 aus seiner Gebrauchslage durch Herausziehen aus der schrägen Kulissenführung (5) bis hin zum zugehörigen Drehschiebegelenk (4) und Verschwenken in die Horizontale sowie anschließendes Einschieben in die zugehörige horizontale Kulissenführung (6) in seine versenkte Nichtgebrauchslage gebracht werden. Wie der Fig. 3 zu entnehmen ist, ist bei einem Aufstiegsbügel (1) in seiner Nichtgebrauchslage ein freier Durchstieg im Bereich des Fahrzeugtunnels (13) möglich.

In Fig. 2 ist der Aufstiegsbügel (1) in Verbindung mit einem Notsitz mit unterem Schubladenelement (12) dargestellt, das sich über dem Fahrzeugtunnel (13) befindet. Schubladenelement (12) ist in seiner Höhe so getroffen, daß es höhenmäßig im Bereich der Drehschiebegelenke (4) liegt, so daß bei einem Aufstiegsbügel (1) in seiner Nichtgebrauchslage ein Herausziehen des Schubladenelements (12) nicht möglich, d.h. der Aufstiegsbügel als Sicherheitsbügel verwendet ist. Am Aufstiegsbügel kann ein (nicht veranschaulichtes) Schloß ausgebildet sein, um eine Diebstahlsicherung für das Schubladenelement zu realisieren.

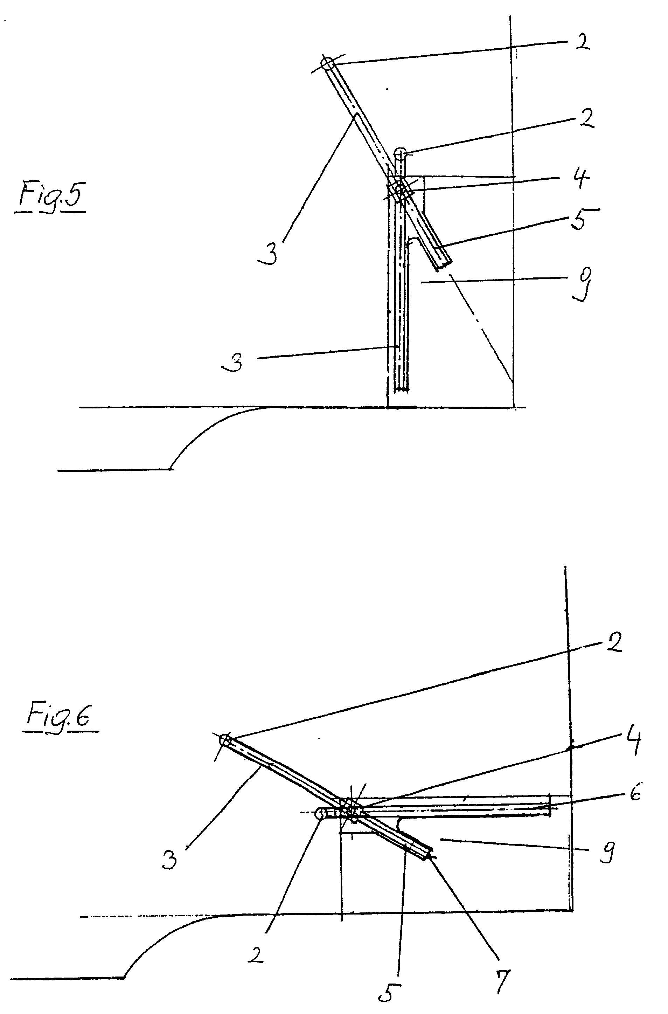

In den Fig. 5 und 6 sind gleich ausgebildete Zwischenplatten (9) dargestellt, deren schräge Kulissenführung (5) spitzwinklig deutlich außerhalb der Winkelhalbierenden verläuft, so daß bei seitenverkehrter Montage der Zwischenplatten (9) sich einmal eine steile Schräglage eines Aufstiegsbügels (11) gemäß Fig. 5 bei einem kurzen Fahrerhaus und das andere Mal eine flache Schräge eines Aufstiegsbügels (1) in seiner Gebrauchslage gemäß Fig. 6 in einem langen Fahrerhaus realisieren läßt. Bei Verwendung gleicher Einzelteile können somit unterschiedliche Tritthöhen eines Aufstiegsbügels (1) geschaffen werden.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Ansprüche

1. Fahrzeug mit Aufstiegshilfe im Fahrzeuginnenraum,
gekennzeichnet durch
zumindest einen im wesentlichen U-förmigen Auftrittsbügel (1) mit im wesentlichen horizontaler als Sprosse (2) oder Trittfläche ausgebildeter Basis, dessen beide im wesentlichen zueinander parallele Schenkel (3) in fahrzeugfesten Drehschiebergelenken (4) aufgenommen, in nachfolgenden fahrzeugfesten Kulissenführungen (5, 6) geführt und endseitig am Kulissenboden (7) abgestützt sind.

2. Fahrzeug nach Anspruch 1, dadurch gekennzeichnet,
daß bezogen auf jeden Schenkel (3) zumindest eine schräge geradlinige Kulissenführung (5) ausgebildet ist.

3. Fahrzeug nach Anspruch 1 oder 2, dadurch gekennzeichnet,
daß bezogen auf jeden Schenkel (3) eine weitere horizontale geradlinige Kulissenführung (6) ausgebildet ist, wobei die Schwenkachse (8) des zugehörigen Drehschiebergelenks (4) sich an der Schnittstelle der Kulissenführungen (5, 6) befindet.

4. Fahrzeug nach einem der Ansprüche 1 bis 3, dadurch gekennzeichnet,
daß die Schenkel (3) teleskopartig verlängerbar ausgebildet sind.

5. Fahrzeug nach einem der Ansprüche 1 bis 4, dadurch gekennzeichnet,
daß die Kulissenführungen (5, 6) eines Schenkels in einer fahrzeugfesten Zwischenplatte (9) ausgebildet sind.

6. Fahrzeug nach Anspruch 5, dadurch gekennzeichnet,
daß die schräge Kulissenführung (5) in der im wesentlichen rechteckigen oder quadratischen Zwischenplatte spitzwinklig und sich deutlich von 45° unterscheidend angeordnet ist (vgl. Fig. 5 und 6).

7. Fahrzeug nach einem der Ansprüche 1 bis 6, dadurch gekennzeichnet,
daß die fahrzeugfesten Befestigungselemente des Auftrittsbügels (1) (Drehschiebergelenke, Kulissenführungen bzw. Zwischenplatten) an bzw. in einem fahrzeugfest eingebauten anderen Funktionsteil (Sitzunterbau 10, Bettunterbau 11, Schrankelement, Schubladenelement 12, Fahrzeugtunnel 13 od.dgl.) angeordnet sind.

8. Fahrzeug nach Anspruch 7, dadurch gekennzeichnet,
daß das Funktionsteil ein Schubladenelement (12) ist, das durch den in der horizontalen Kulissenführung (6) aufgenommenen Auftrittsbügel (1) in vollständig eingeschobener Stellung des Bügels mittels eines Bügelschlosses verschließbar ist.

9. Fahrzeug nach einem der Ansprüche 1 bis 8, dadurch gekennzeichnet,
daß der Auftrittsbügel (1) im Mitteltunnelbereich in einem Nutzfahrzeug-Fahrerhaus (14) hinter den Sitzen angeordnet ist (vgl. Fig. 1).

### Claims

1. A vehicle with a climbing aid in the interior of the vehicle, characterised by at least one substantially U-shaped step (1) having a substantially horizontal base in the form of a rung or tread (2) and two substantially parallel arms (3) which are received in rotary joints (4) secured to the vehicle, are guided in adjacent connecting-arm guides (5, 6) secured to the vehicle and are supported at their ends in an arm-guide bottom (7).

2. A vehicle according to claim 1, characterised in that at least one sloping rectilinear connecting-arm guide (5) is provided for each arm (3).

3. A vehicle according to claim 1 or 2, characterised in that an additional horizontal rectilinear connecting-arm guide (6) is provided for each arm (3), and the pivot (8) of the associated rotary joint (4) is disposed at the place of intersection between the connecting-arm guides (5 and 6).

4. A vehicle according to any of claims 1 to 3, characterised in that the arms (3) are telescopically extendable.

5. A vehicle according to any of claims 1 to 4, characterised in that the connecting-arm guides (5, 6) of an arm are formed in an intermediate plate (9) secured to the vehicle.

6. A vehicle according to claim 5, characterised in that the sloping connecting-arm guide (5) is disposed at an acute angle, differing appreciably from 45°, in the intermediate plate, which is substantially rectangular or square (compare Figures 5 and 6).

7. A vehicle according to any of claims 1 to 6, characterised in that the elements securing the step (1) and fixed to the vehicle (i.e. rotary joints, connecting-arm guides or intermediate plates), are disposed on or in another functional part (seat substructure 10, bed substructure 11, cupboard element, drawer element 12, vehicle tunnel 13 or the like) which is permanently incorporated in the vehicle.

8. A vehicle according to claim 7, characterised in that the functional part is a drawer element (12) which is closable by a lock on the step (1) when the step is received in the horizontal connecting-arm guide (6) and is in the completely retracted position.

9. A vehicle according to any of claims 1 to 8, characterised in that the step (1) is disposed in the central tunnel region in a commercial vehicle driver's cab (14) behind the seat (compare Figure 1).

### Revendications

1. Véhicule comportant un dispositif d'aide à la montée, à l'intérieur de l'espace du véhicule, caractérisé par au minimum une marche d'accès (1) sensiblement en forme de U avec une base sensiblement horizontale formée comme un échelon (2) ou une surface de marche, dont les deux montants (3) sensiblement parallèles entre eux insérés à l'intérieur des charnières (4) solidaires du véhicule, sont guidés dans des glissières de guidage (5, 6) au véhicule et s'appuient à leurs extrémités sur le fond de la glissière (7).

2. Véhicule selon la revendication 1, caractérisé en ce que, autour de chaque montant (3) il y a au moins une glissière de guidage oblique rectiligne.

3. Véhicule selon les revendications 1 ou 2, caractérisé en ce que, sur chaque montant (3) est réalisé également une glissière de guidage (6) horizontale, rectiligne, telle que l'axe de pivotement (8) de la charnière correspondante (4) se trouve au point d'intersection des glissières de guidage (5, 6).

4. Véhicule selon l'une des revendications 1 à 3, caractérisé en ce que, les montants (3) peuvent être prolongés de façon télescopique.

5. Véhicule selon l'une des revendications 1 à 4, caractérisé en ce que les glissières de guidage (5, 6) d'un montant sont formées dans une tablette intermédiaire (9) solidaire du véhicule.

6. Véhicule selon la revendication 5,caractérisé en ce que la glissière de guidage (5) inclinée est aménagée dans la tablette intermédiaire sensiblement rectangulaire ou carrée en formant un angle aigu, de valeur nettement différente de 45° (cf figures 5 et 6).

7. Véhicule selon l'une des revendications 1 à 6, caractérisé en ce que les éléments de fixation de la marche d'accès (1) solidaires du véhicule, (charnières, glissières de guidage ou respectivement tablettes intermédiaires) sont aménagés sur ou respectivement dans une autre partie fonctionnelle construite solidairement avec le véhicule (bâti de siège (10), sous-bassement d'un bâti (11), élément de rangement, tiroir, tunnel de transmission du véhicule (13) ou similaire).

8. Véhicule selon la revendication 7, caractérisé en ce que la partie fonctionnelle est un tiroir (12) qui puisse se verrouiller au moyen d'un cadenas en forme de barre grâce à la marche d'accès (1) engagée dans la glissière de guidage (6) horizontale, et poussée jusqu'au bout.

9. Véhicule selon l'une des revendications 1 à 8, caractérisé en ce que la marche d'accès (1) est placée derrière le siège dans la zone intermédiaire du tunnel de transmission d'une cabine de conduite d'un véhicule utilitaire.

Fig.1

Fig. 2

EP 0 322 606 B1

Fig.3

1

12

13

EP 0 322 606 B1

Fig. 4

_Fig.5_

_Fig.6_

10